# EUROPÄISCHE PATENTANMELDUNG

(11) **EP 3 957 416 A1**
(43) Veröffentlichungstag der Anmeldung: **23.02.2022**
(21) Anmeldenummer: 20191799.4
(22) Anmeldetag: 19.08.2020
(51) Int. Cl.: B22F 3/105, B29C 64/153, B29C 64/371, B33Y 10/00, B33Y 30/00

(54) **ANLAGE ZUR ADDITIVEN FERTIGUNG**

(71) Anmelder: Peter Lehmann AG, 3552 Bärau (CH)
(72) Erfinder: HULLIGER Urs, 4543 Deitingen (CH); LEHMANN Hansruedi, 3532 Mirchel (CH)
(74) Vertreter: AMMANN PATENTANWÄLTE AG

(57) **Zusammenfassung**

In einer Anlage der additiven Fertigung (1) wird das Schutzgas auf eine Arbeitstemperatur nahe der stationären Temperatur in der Bauzone vorgewärmt, um auf diese Art einen Verlust von Wärme und damit ein Abkühlen der Oberfläche des Baumaterials zu vermeiden. Bevorzugt wird ein Strom (47) des Schutzgases über der Bauzone (49) erzeugt, um die Einhaltung der Temperatur zu gewährleisten und dabei bevorzugt auch Rauchgase aus der Bauzone (49) abzuführen.

## Beschreibung

Die vorliegende Erfindung betrifft eine Anlage zur additiven Fertigung gemäss Oberbegriff des Anspruchs 1.

Additive Fertigungsverfahren zeichnen sich generell dadurch aus, dass ein Werkstück schichtweise aus einem Baumaterial aufgebaut wird. In einer Variante wird dazu über einer Bauplattform schichtweise das Baumaterial aufgetragen und selektiv verfestigt. Ein solches Verfahren umfasst das örtliche Erhitzen - in der Regel in Zonen, die Querschnitten des Werkstücks entsprechen - durch gezieltes Aufbringen von Strahlung, zum Beispiel mittels eines Lasers. Das Baumaterial ist dabei in der Regel pulverförmig, wobei die Partikel gemäss der gewünschten Auflösung eine entsprechend kleine Korngrösse aufweisen. Unter der Einwirkung der Strahlung werden die Partikel des Baumaterials erhitzt und schmelzen zusammen (SLM-Verfahren für *Selective Laser Melting)* oder sintern zusammen (SLS-Verfahren für *Selective Laser Sintering).*

Einer der Faktoren für die Qualität des Werkstücks und auch die Produktionsgeschwindigkeit ist die generelle Temperatur des Baumaterials. An der Oberfläche, an der das selektive Erwärmen durch die Strahlung erfolgt, ist die Temperatur generell möglichst so eingestellt, dass die Partikel sicher noch nicht schmelzen oder sintern, aber mit relativ geringem Energieeintrag dazu gebracht werden können.

Eine entsprechende Vorrichtung ist zum Beispiel aus der EP-2 335 418 bekannt. Darin wird einerseits die Arbeitstemperatur durch eine Heizung in der Bauplatte eingestellt. Zum anderen wird eine Vorheizung des Baumaterials durch einen zweiten Laser vorgeschlagen. Ausserdem wird das Verfahren unter einer Schutzgasdecke durchgeführt, da die Partikel bei der erhöhten Temperatur dazu neigen, in Gegenwart von Sauerstoff zu oxidieren oder andere degenerative Veränderungen zu erleiden.

Eine Aufgabe der vorliegenden Erfindung besteht darin, eine Vorrichtung anzugeben, mit der die Arbeitstemperatur auf eine andere Art eingestellt wird.

Eine derartige Vorrichtung ist im Anspruch 1 angegeben. Die weiteren Ansprüche geben bevorzugte Ausführungsformen an.

Demgemäss besteht eine grundsätzliche Eigenschaft der vorgeschlagenen Vorrichtung darin, dass das Schutzgas idealerweise auf die Arbeitstemperatur oder wenigstens auf eine Temperatur nahe der Arbeitstemperatur vorgewärmt wird, um einen Wärmeverlust über die Oberfläche des Baumaterials zu vermeiden. Mit anderen Worten wird eine Art aktive Temperaturisolierung der Baumaterialoberfläche hergestellt. In einer bevorzugten Ausführung strömt das erhitzte Schutzgas über die Oberfläche hinweg und entfernt dabei auch oft beim Herstellungsvorgang entstehende Rauchgase, die ihrerseits wieder die Effizienz und die Präzision der Strahlung durch Streueffekte negativ beeinflussen können.

Gemäss einem anderen bevorzugten Aspekt erfolgt die Erhitzung in wenigstens zwei Stufen, nämlich einer ersten, in der das abströmende Schutzgas zum Vorwärmen von frischem Schutzgas verwendet wird und allenfalls durch eine Zusatzheizung auf die erforderliche Temperatur für das Aufbringen auf die Arbeitsmaterialoberfläche gebracht wird. In einer weiter bevorzugten Ausführung ist das der Fertigungsanlage entweichende Schutzgas wieder soweit abgekühlt, dass es direkt einer der üblichen Anlagen zur Aufbereitung für eine neuerliche Verwendung zugeführt werden kann, namentlich dem Entfernen von Sauerstoff und anderen unerwünschten Bestandteilen.

Die Erfindung soll weiter an einem Ausführungsbeispiel unter Bezugnahme auf Figuren erläutert werden:
- Figur 1: Schema einer Anlage zu additiven Fertigung inklusive Schutzgasaufbereitung.
- Figur 2: Senkrechter Teilschnitt durch eine Anlage zur additiven Fertigung.
- Figur 3: Isometrische schematisierte Schnittdarstellung gemäss III-III in Figur 2, Teilschnitt.
- Fig. 4: Vergrösserter Ausschnitt gemäss IV in Fig. 3.

Neben der additiven Fertigungsanlage 1 (z. Bsp. SLM- oder SLS-Anlage) ist eine Gasaufbereitung 3 gezeigt. Über die Gaszufuhrleitung 5 liefert die Gasaufbereitung 3 frisches Schutzgas an die Fertigungsanlage 1. Über die Gasabfuhrleitung 7 gelangt verbrauchtes Schutzgas von der Fertigungsanlage 1 zurück in die Gasaufbereitung 3. In der Gasaufbereitung wird frisches Schutzgas zur Verfügung gestellt (Stickstoff, Argon, andere Edelgase oder Mischungen daraus), die Gaszusammensetzung wird gemessen, das verbrauchte Schutzgas wird aufbereitet (gefiltert usw.) und mit frischem Schutzgas vermischt, um es wieder der Fertigungsanlage 1 zuführen zu können.
Die Temperatur des Schutzgases in der Zufuhrleitung 5 beträgt z. Bsp. 50 bis 70 °C, während das zurückströmende Schutzgas in der Abfuhrleitung 7 eine höhere Temperatur, z. Bsp. 60 bis 100 °C, aufweist.

Im Wärmetauscher 9 werden zuströmendes Schutzgas und abströmendes Schutzgas getrennt voneinander, aber im Gegenstrom zueinander geführt, so dass das abströmende Schutzgas das frisch zuströmende Schutzgas vorwärmt. In der Zusatzheizung 11 wird das frische Schutzgas auf die gewünschte Temperatur gebracht, z. Bsp. 500 °C. Mit dieser Temperatur tritt es am Zufuhranschluss 13 in den Bauraum 15 ein. Es durchströmt im Wesentlichen horizontal den Bauraum 15 zum Auslass 17. Über die Leitung 19 gelangt es zurück zum Wärmetauscher 9.

Im Bauraum 15 befindet sich der Bauschacht 21 mit einer Bauplattform, über der schichtweise Baumaterial aufgebracht wird. Von oben wird der Laserstrahl 23 auf die Oberfläche des Baumaterials im Bauschacht 21 geführt.

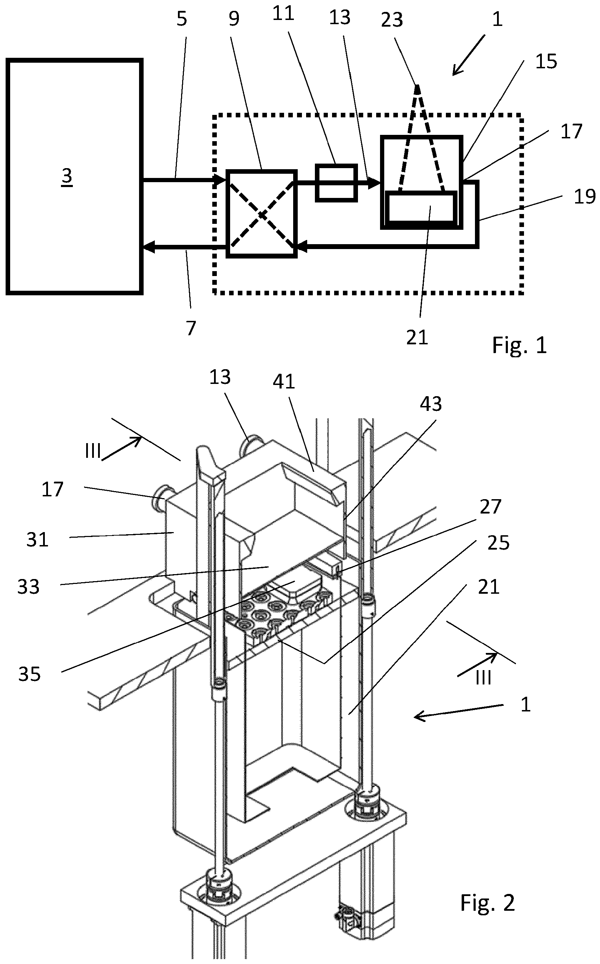

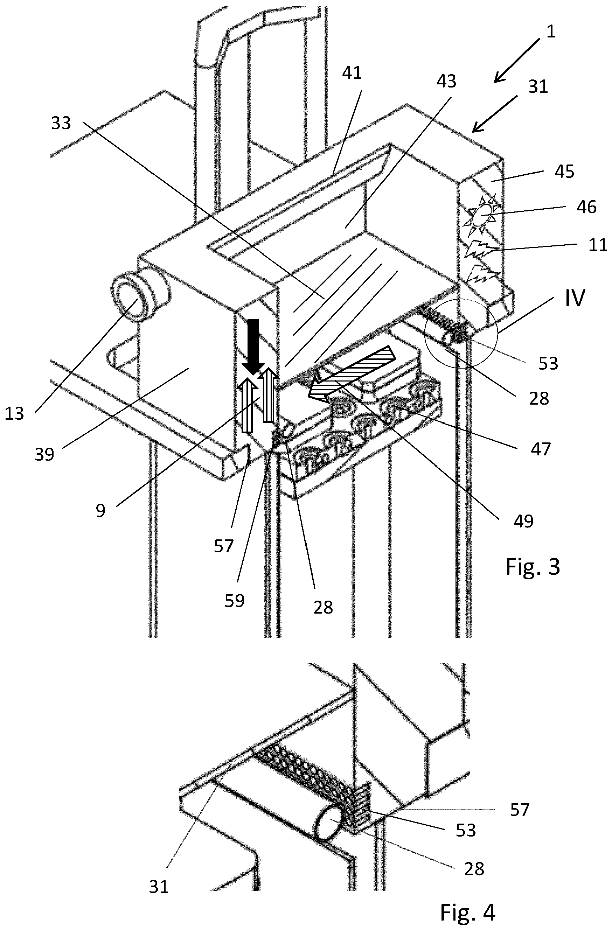

Figuren 2 und 3 zeigen das Innere des Bauraums 15 mehr im Detail. Im Bauschacht 21 ist die Bauplattform 25 auf eine im Wesentlichen übliche Art vertikal verschiebbar angeordnet, um sie schichtweise während des Absinkens mit Baumaterial (nicht dargestellt) bedecken zu können. Ein Rakel 27 ist auf Führungen 28 verschiebbar angeordnet, um die Oberfläche des Baumaterials einzuebnen. Auf den Bauschacht 21 ist der Schutzgasrahmen 31 aufgesetzt. Im Inneren des Schutzgasrahmens 31 befindet sich eine hochwertige Glasplatte 33, um das Bestrahlen mit einem Laser (nicht dargestellt) von oben zu gestatten. Die Glasplatte 33, alternativ eine Platte aus einem anderen, den Anforderungen entsprechenden transparenten Material, darf den Laserstrahl möglichst wenig beeinflussen, um die Qualität des Werkstücks 35 möglichst nicht zu beeinflussen. Allenfalls ist eine vorausberechenbare Beeinflussung wie z. Bsp. eine definierte Brechung denkbar, die bei der Steuerung des Laserstrahls berücksichtigt werden kann. Am Schutzgasrahmen 31 sind der Zufuhranschluss 13 und der Auslass 17 für das Schutzgas vorhanden.

In der Vorderwand 39 des Schutzgasrahmens 31, die Einlass 13 und Auslass 17 trägt, ist der Wärmetauscher 9 integriert. Über eine Leitung in den Oberkanten 41 der Seitenwände 43 des Schutzgasrahmens 31 gelangt das frische Schutzgas zur Rückwand 45. In der Rückwand befinden sich die Zusatzheizung 11 sowie Sensoren, um die Temperatur des Schutzgases auf die gewünschte Arbeitstemperatur regeln zu können. Gegebenenfalls enthält die Rückwand 45 auch noch einen Ventilator 46 und/oder ein Regelmittel wie ein Proportionalventil, um einen definierten Gasstrom 47 über der Bauzone 49 einzustellen.

Nahe der Unterkante 53 der Rückwand 45 befinden sich geeignete Austrittseinrichtungen 55 (s. a. Fig. 4) wie ein Spalt oder Düsen, aus denen das vorgeheizte Gas in den Raum über der Bauzone 49 austreten kann. Bevorzugt sind die Austrittseinrichtungen 55 ausgebildet, dass der austretende Gasstrom laminar ist. Eine geeignete Massnahme ist eine sich über die Breite erstreckende Wabenstruktur. Nahe der Unterkante 57 der Vorderwand 39 sind entsprechende Eintrittseinrichtungen 59, bevorzugt konstruktiv identisch mit den Austrittseinrichtungen 57, vorhanden, durch die das Schutzgas als gebrauchtes Schutzgas in den Wärmetauscher 9 eintreten kann, um das frische Schutzgas vorzuwärmen.

Um ein Werkstück 35 entnehmen zu können, kann beispielsweise der Schutzgasrahmen 31 insgesamt abgenommen werden oder auch die Glasplatte 33 entfernt werden.

Aus der vorangehenden Beschreibung einer beispielhaften Ausführung sind dem Fachmann Abwandlungen und Ergänzungen zugänglich, ohne den Schutzbereich der Erfindung zu verlassen, der durch die Ansprüche festgelegt ist.

## Patentansprüche

1. Anlage (1) zur additiven Fertigung mindestens eines Werkstücks in einer Bauzone (49) bei von der Umgebung abweichender Arbeitstemperatur, **dadurch gekennzeichnet, dass** eine Einrichtung (31) vorhanden ist, die eingerichtet ist, über der Bauzone eine Schicht eines Schutzgases aufrecht zu erhalten, wobei die Einrichtung eine Heizung (9, 11) umfasst, die eingerichtet ist, das Schutzgas auf eine Gasarbeitstemperatur zu erwärmen, und die Gasarbeitstemperatur im Wesentlichen mit der Arbeitstemperatur übereinstimmt, um den Wärmeverlust in der Bauzone zu verringern.

2. Anlage (1) gemäss Anspruch 1, **dadurch gekennzeichnet, dass** die additive Fertigung ein selektives Erhitzen gegenüber der Arbeitstemperatur und Abkühlen eines granularen Baumaterials in der Bauzone umfasst, um Partikel des Baumaterials miteinander zu verbinden, insbesondere durch Schmelzen oder Sintern.

3. Anlage (1) gemäss Anspruch 2, **dadurch gekennzeichnet, dass** das selektive Erhitzen durch Strahlung (23), insbesondere einen Laserstrahl, erfolgt.

4. Anlage (1) gemäss einem der Ansprüche 1 bis 3, **dadurch gekennzeichnet, dass** die Arbeitstemperatur mindestens 100 °C, bevorzugt mindestens 200 °C, weiter bevorzugt mindestens 300 °C und noch weiter bevorzugt mindestens 400 °C ist.

5. Anlage (1) gemäss einem der Ansprüche 1 bis 4, **dadurch gekennzeichnet, dass** das Schutzgas im Wesentlichen eines der folgenden Gase oder ein Gemisch daraus ist: Stickstoff, Helium, Neon, Argon, Krypton, Xenon.

6. Anlage (1) gemäss einem der Ansprüche 1 bis 5, **dadurch gekennzeichnet, dass** die Einrichtung (31) einen an einer Seite der Bauzone (49) liegenden Auslass für Schutzgas und einen im Wesentlichen relativ zur Bauzone gegenüberliegenden Einlass für Schutzgas aufweist, so dass von Einlass zu Auslass ein über die Bauzone ziehender Strom (47) von Schutzgas herstellbar ist.

7. Anlage (1) gemäss Anspruch 6, **dadurch gekennzeichnet, dass** die Einrichtung einen Strom des Schutzgases erzeugende und/oder kontrollierende Mittel umfasst, bevorzugt mindestens ein Gebläse (46) und/oder mindestens ein steuerbares Ventil, so dass eine vorgegebene Geschwindigkeit des Gasstroms erzeugbar und/oder einstellbar ist, bevorzugt ein Strom mit einer Geschwindigkeit von höchstens 0,3 m/s, bevorzugt höchstens 0,2 m/s und weiter bevorzugt im Bereich 0,05 bis 0,15 m/s.

8. Anlage (1) gemäss einem der Ansprüche 1 bis 7, **dadurch gekennzeichnet, dass** die Einrichtung eine über der Bauzone (49) angeordnete Abdeckung (33) aufweist, bevorzugt aus einem Material, das für die Strahlung, die zum Erhitzen des Baumaterials verwendet wird, transparent ist, so dass das Schutzgas in einem Raum über der Bauzone eingeschlossen ist.

9. Anlage (1) gemäss Anspruch 8, **dadurch gekennzeichnet, dass** die Abdeckung (33) eine Glasplatte ist, die für den in der Anlage verwendeten Laser transparent ist.

10. Anlage (1) gemäss einem der Ansprüche 1 bis 9, **dadurch gekennzeichnet, dass** die Heizung einen Wärmetauscher (9) für Austausch von Wärme zwischen der Einrichtung zugeführtem Schutzgas und aus der Einrichtung abgeführtem Schutzgas und eine dem Wärmetauscher folgende Zusatzheizung (11) für das zugeführte Schutzgas umfasst, so dass im Wärmetauscher das zugeführte Schutzgas teilweise durch das abgeführte Schutzgas aufwärmbar ist und das abgeführte Gas abkühlbar ist.

11. Anlage (1) gemäss einem der Ansprüche 1 bis 10, **dadurch gekennzeichnet, dass** die Gasarbeitstemperatur des Schutzgases, insbesondere bei Eintritt des Schutzgases in die Bauzone (49), nicht mehr als 20 K (Kelvin), bevorzugt nicht mehr als 15 K und weiter bevorzugt nicht mehr als 10 K von der Arbeitstemperatur abweicht.

12. Anlage (1) gemäss Anspruch 11, **dadurch gekennzeichnet, dass** die Gasarbeitstemperatur nicht höher als die Arbeitstemperatur ist, um den Aggregatzustand des Baumaterials nicht zu beeinflussen.
